# EUROPÄISCHE PATENTSCHRIFT

(11) **EP 3 214 786 B1**
(45) Veröffentlichungstag und Bekanntmachung des Hinweises auf die Patenterteilung: **09.07.2025**
(21) Anmeldenummer: 17157750.5
(22) Anmeldetag: 24.02.2017
(51) Int. Cl.: H04L 1/00, H04W 4/00, H04W 4/70, H04L 7/04

(54) **VERFAHREN UND VORRICHTUNG ZUR FUNKÜBERTRAGUNG VON DATEN**
DATA TRANSMISSION METHOD AND APPARATUS
METHODE ET APPAREIL DE TRANSMISSION DE DONNEES

(30) Priorität: 02.03.2016 DE 102016103710
(43) Veröffentlichungstag der Anmeldung: 06.09.2017
(73) Patentinhaber: Techem Energy Services GmbH, 65760 Eschborn (DE)
(72) Erfinder: Kähler, Arne, 61350 Bad Homburg (DE); Wurl, Andreas, 61462 Königstein (DE)
(74) Vertreter: Keil & Schaafhausen Patentanwälte PartGmbB

(56) Entgegenhaltungen:
- KAN YU ET AL: "Reliable and Low Latency Transmission in Industrial Wireless Sensor Networks", PROCEDIA COMPUTER SCIENCE, vol. 5, 20 September 2011 (2011-09-20), pages 866 - 873, XP028266227, ISSN: 1877-0509, [retrieved on 20110817], DOI: 10.1016/J.PROCS.2011.07.120
- KAN YU ET AL: "Adaptive forward error correction for best effort Wireless Sensor Networks", COMMUNICATIONS (ICC), 2012 IEEE INTERNATIONAL CONFERENCE ON, IEEE, 10 June 2012 (2012-06-10), pages 7104 - 7109, XP032274622, ISBN: 978-1-4577-2052-9, DOI: 10.1109/ICC.2012.6364798
- GIRS SVETLANA ET AL: "Adopting FEC and packet combining to increase the performance of IWSNs using relaying", 2015 INTERNATIONAL CONFERENCE ON COMPUTING AND NETWORK COMMUNICATIONS (COCONET), IEEE, 16 December 2015 (2015-12-16), pages 90 - 97, XP032866174, DOI: 10.1109/COCONET.2015.7411172

## Beschreibung

Die Erfindung betrifft ein Verfahren zur Funkübertragung von Daten, insbesondere von Gebäudeverbrauchs-, Gebäudesensor- und/oder Gebäudeaktordaten in einem lokalen Gebäudefunknetz. Bei dem Verfahren werden die Daten in einem Telegramm entsprechend einem definierten Standard versendet und empfangen, wobei der Standard in dem Telegramm einen Standarddatenbereich zum Übertragen von Daten und proprietären Bereich zum Übertragen von herstellerspezifischen Daten vorsieht. Die Daten werden also mittels eines standardkonformen Telegramms ausgetauscht, wobei der Standard kein Fehlerkorrekturverfahren vorsieht, wohl aber einen proprietären Bereich im Telegramm. Unter dem definierten Standard werden Protokolle für die Funkübertagung einschließlich der Festlegung der Telegramme verstanden, bspw. im Rahmen des OSI-Schichtenmodells. Erfindungsgemäß ist durch den Standard kein Fehlerkorrekturverfahren vorgesehen. Das Verfahren kann gerade bei einem Standard eingesetzt werden, durch den kein Fehlerkorrekturverfahren, insbesondere kein Fehlerkorrekturverfahren mit Forward Error Correction (FEC), vorgesehen ist.

Der Ablesevorgang von Verbrauchswerten aus Verbrauchserfassungsgeräten, wie beispielsweise Heizkostenverteilern, Wasserzählern, Wärmezählern oder dgl. Messgeräten oder Zählern, wird immer weiter automatisiert. Dazu werden Verbrauchs- und Sensordaten bspw. aus Heizkostenverteilern, anderen Verbrauchserfassungsgeräten oder allgemeiner Messgeräten bzw. Zählern häufig an Datensammler übertragen, welche die Messdaten bspw. gebäudezentral sammeln und beispielsweise an Aktoren innerhalb des Gebäudes und/oder an Abrechnungsdienstleister übertragen. Ein solcher Datensammler kann an einer zentralen Position fest installiert sein, oder alternativ bei einer sogenannten Drive-By Ablesung in einem Fahrzeug oder bei der Walk-By Ablesung durch eine Ableser in die Nähe der Verbrauchserfassungsgeräte und/oder Sensoren gebracht werden, um die von den Messgeräten ausgesandten Verbrauchs- und/oder Sensordaten zu empfangen. Auch eine Ablesung im Fly-By Verfahren unter Verwendung eines fernsteuerbaren Fluggeräts ist bekannt.

Zur Übertragung und ggf. Weiterleitung dieser Gebäudeverbrauchs- und/oder Gebäudesensordaten in einem bspw. Gebäude-Sensornetzwerk werden heutzutage typischer Weise Funksysteme insbesondere in den SRD-Bändern (im Sub-Gigaherz-Bereich, wie etwa 868 MHz oder 434 MHz) genutzt. Um dabei eine Kompatibilität von Sendern und Empfängern verschiedener Hersteller zu gewährleisten, werden zur Funkübertragung standardisierte Telegramme verwendet. In einem derartigen Standard, wie bspw. dem OMS-Standard, ist es derzeit nicht vorgesehen, Fehlerkorrekturdaten etwa für eine Forward-Error-Correction (FEC) mit zu übertragen.

Bekannte Verfahren zur Fehlerkorrektur, wie bspw. ein Reed-Solomon-Verfahren, können dazu eingesetzt werden, eventuell auftretende Übertragungsfehler im übermittelten Telegramm nach dessen Empfang, bspw. direkt im Empfänger, zu korrigieren und so fehlerfreie Daten zu erhalten. Dies wird dadurch erreicht, dass die zu übertragenden Daten in redundanter Weise kodiert werden. Diese Verfahren eignen sich besonders für die Fehlerkorrektur in unidirektionalen Funksystemen.

In dem Aufsatz Kann Yu et. al., "A Flexible Error Correction Scheme for IEEE 802.15.4-based Industrial Wireless Sensor Networks" wird ein Verfahren zur Forward Error Correction (FEC) beschrieben, das die Fehlerkorrektur in Verbindung mit einer speziellen abschließenden Fehlerkorrektur dann einsetzt, wenn mittels einer Prüfsumme ein Übertragungsfehler festgestellt wurde. Die Fehlerkorrekturdaten (FEC-Bits) sind Bestandteil des vollständig zu empfangenden Telegramms. In einem solchen System kann eine Fehlerkorrektur nur innerhalb des verwendeten Standards realisiert werden.

Die Entgegenhaltungen KAN YU ET AL, "Reliable and Low Latency Transmission in Industrial Wireless Sensor Networks", PROCEDIA COMPUTER SCIENCE, vol. 5, doi:10.1016/J.PROCS.2011.07.120, ISSN 1877-0509; KAN YU ET AL, "Adaptive forward error correction for best effort Wireless Sensor Networks", COMMUNICATIONS (ICC), 2012 IEEE INTERNATIONAL CONFERENCE ON, IEEE, (20120610), doi:10.1109/ICC.2012.6364798, ISBN 978-1-4577-2052-9; KANN YU, "A Flexible Errror Correction Scheme for IEEE 802.15.4-based Industrial Wireless Sensor Networks" und GIRS SVETLANA ET AL, "Adopting FEC and packet combining to increase the performance of IWSNs using relaying", 2015 INTERNATIONAL CONFERENCE ON COMPUTING AND NETWORK COMMUNICATIONS (COCONET), IEEE, (20151216), beschreiben jeweils Verfahren zur Forward Error Correction (FEC), die eine Fehlerkorrektur bei einer drahtlosen Übertragung nach dem IEEE 802.15.4-Protokoll dann einsetzen, wenn mittels einer Prüfsumme ein Übertragungsfehler in dem übertragenen Protokoll festgestellt wurde. Damit ist bekannt, dass durch Fehlerkorrekturverfahren die Funkreichweite vergrößert werden kann. Die Fehlerkorrektur soll in bestimmten hardwarenahen Schichten gemäß dem OSI-Schichtenmodell stattfinden, insbesondere dem MAC-Layer, weil eine Übertragung in der Bitübertragungsschicht (Physical Layer) in der Regel mangels Zugriff in Ergänzung eines Standards nicht möglich ist. Das gemäß KAN YU ET AL, "Reliable and Low Latency Transmission in Industrial Wireless Sensor Networks" bevorzugte Konzept sieht vor, das gesamte MAC-Layer Paket in Gruppen zu unterteilen und jede Gruppe mit einem systematischen FEC-Code zu kodieren, wobei das Prüfsummenfeld (FCS) ausdrücklich ausgenommen werden soll. Ohne Anwendung einer FEC-Kodierung würde das Datenpaket andernfalls als fehlerhaft angesehen. Andererseits ist die FEC-Dekodierung ist zeitaufwendig und führt zu Latenzen. Bei dem bevorzugten systematischen FEC-Code bleibt der originale Datencode der Payload für die verschiedenen Gruppen erhalten, und für jede Gruppe werden redundante FEC-Daten an die Original-Payload angehängt. Die Prüfsumme FCS wird dann über das gesamte Datenpacket, d.h. den originalen Datencode und die redundanten FEC-Daten, gemeinsam gebildet.

In der WO 2015/974666 A1 wird ein Fehlerkorrekturverfahren für Telegramme beschrieben, die zwei Telegramm-Teile mit den Nutzdaten und daran angehängt mit Fehlerkorrekturdaten enthalten. Die Fehlerkorrekturdaten sind aber nur ein optionaler Telegrammteil, der empfangen werden kann, aber nicht empfangen werden muss. Dies wird dadurch erreicht, dass der erste Telegramm-Teil alleine einem Übertragungsstandard entspricht, so dass der erste Telegramm-Teil auch unabhängig von dem anderen Telegramm-Teil empfangen werden kann.

Die in der heutigen Praxis eingesetzten Standards zur Übermittlung von Verbrauchs-, Sensor- und/oder Aktordaten in einem Gebäude mittels eines lokalen Gebäudefunknetzes sehen eine solche Fehlerkorrektur für die Telegramme aber nicht vor und können daher nur in einem begrenzten Abstand zwischen Empfänger und Sender zur fehlerfreien Übertragung eingesetzt werden. Soll mit einem derartigen Verfahren eine größere Übertragungsreichweite erreicht werden, müsste eine wesentlich höhere Sendeleistung verwendet werden. Dies ist allerdings oftmals nicht möglich, da es sich bei den Sendern meist um batteriebetriebene Einheiten handelt. Da deren Batteriekapazität aus Kostengründen meist gering ist, steht nur eine begrenzte Batterie- und damit Sendeleistung zur Verfügung, damit die angestrebte Lebensdauer der Mess- bzw. Verbrauchserfassungsgeräte zuverlässig erreicht werden kann. Die Höhe der Sendeleistung kann ferner auch durch regulatorische Vorgaben bspw. europäische Richtlinien eingeschränkt sein.

Aufgabe der vorliegenden Erfindung ist es daher, ein Verfahren zu schaffen, mit dem eine Funkübertragung von Daten, insbesondere von Verbrauchs-, Sensor- und/oder Aktordaten in einem Gebäude in einem lokalen Gebäudefunknetz mittels eines standardkonformen Telegramms auch über größere Reichweiten ohne Informationsverlust möglich ist, wobei dieser definierte Standard nicht unbedingt ein Fehlerkorrekturverfahren, insbesondere kein FEC-Fehlerkorrekturverfahren, vorsieht, und bei dem die Daten einfach und möglichst vollständig rekonstruiert werden können.

Die obige Aufgabe wird durch ein Verfahren mit den Merkmalen des Anspruchs 1 und eine Vorrichtung mit den Merkmalen der Ansprüche 11 und/oder 12 gelöst. Dabei ist insbesondere vorgesehen, dass in dem proprietären Bereich ein Fehlerkorrekturdatensatz mit Fehlerkorrekturdaten für das Telegramm übermittelt wird, welche aufgrund einer Redundanz eine Fehlerkorrektur der Daten und/oder der herstellerspezifischen Daten bei Übertragungsfehlern zulassen. In Abgrenzung zu den Fehlerkorrekturdaten und/oder einer Kennung für die Fehlerkorrektur im Fehlerkorrekturdatensatz werden die Daten und die herstellerspezifischen Daten (ggf. einschließlich möglicher Dateninformationen im Header) als Nutzdaten oder Payload bezeichnet. Es ist vorgesehen, dass dieser Fehlerkorrekturdatensatz an einer relativ zu dem Ende des Telegramms definierten Position des Telegramms angeordnet wird.

Neben den im Standard festgelegten Datenpunkten im Telegramm für die zu übermittelnden Daten (d.h. die Nutzdaten einschließlich Headerdaten) ist nach dem Standard auch ein proprietärer Bereich im Sinne eines Datenbereich innerhalb des Telegramms vorgesehen, der jedem einzelnen Hersteller zur freien Verfügung steht. Ein solcher Datenbereich wird im Standard häufig als "herstellerspezifischer Datenbereich" bezeichnet. Es ist daher möglich, in diesem inhaltlich im Standard nicht vorgegeben Datenbereich weitere herstellerspezifische Daten und/oder zusätzlich oder alternativ Fehlerkorrekturdaten für das Telegramm zu übermitteln, wobei das Telegramm vollständig standardkonform bleibt. Tritt bei der Übermittlung des Telegramms ein Fehler auf, so kann das fehlerfreie Telegramm mittels der im proprietären Bereich übertragenen Fehlerkorrekturdaten rekonstruiert werden. Aufgrund der Anordnung der Fehlerkorrekturdaten in dem proprietären Bereich werden die Fehlerkorrekturdaten im Folgenden auch als "herstellerspezifische Daten" bezeichnet.

Da die genaue Position der einzelnen Datenpunkte im standardkonformen Telegramm üblicherweise nicht festgelegt ist, werden einzelne Datenpunkte jeweils über Position und Länge des jeweils vorhergehenden Datenpunktes lokalisiert. Durch diese etappenweise Bestimmung der Positionen der einzelnen Datenpunkte kann bereits ein kleiner Fehler in einem einzigen der vorhergehenden Datenpunkte dazu führen, dass die hinteren bzw. folgenden Datenpunkte nicht mehr sicher lokalisiert werden können. Da der Fehlerkorrekturdatensatz aber vor der Durchführung der Fehlerkorrektur lokalisiert werden muss, würde ein solches sukzessives Vorgehen mit einiger Wahrscheinlichkeit dazu führen, dass im Falle eines Übertragungsfehlers die Fehlerkorrekturdaten nicht aufgefunden können und daher die Fehlerkorrektur nicht durchgeführt werden kann.

Deshalb ist erfindungsgemäß der Fehlerkorrekturdatensatz an einer definierten Position hinsichtlich des Telegrammendes angeordnet. Beim Empfang des Telegramms kann über dessen Gesamtlänge, welche im Telegrammkopf (Header) in einem Längenfeld übermittelt wird, das Ende des Telegramms bestimmt werden. Da sich der Fehlerkorrekturdatensatz an einer definierten Position hinsichtlich des Telegrammendes befindet, kann der Datensatz lokalisiert werden, ohne die Längen und Positionen der einzelnen anderen Datenpunkte auswerten zu müssen, weil sich die Gesamttelegrammlänge bereits aus dem Header ergibt.

Durch die Integration der Fehlerkorrektur in ein standardkonformes Telegramm können die Vorteile der Fehlerkorrektur herstellerspezifisch genutzt werden, ohne den Standard verletzen zu müssen oder zu verändern, wie es bspw. bei dem Anhängen von weiteren Informationen an ein standardkonformes Telegramm erfolgt. So führt das erfindungsgemäße Verfahren zu einer höheren Fehlerrobustheit und damit zu einer größeren Reichweite der Übertragung bei gleicher Sendeleistung. Es ist damit dementsprechend möglich, die Dichte der zur Ablesung genutzten Empfänger zu reduzieren, wodurch Kosten an der Verbrauchsstelle gespart werden. Eine weitere Möglichkeit besteht darin, bei gleicher Reichweite die Sendeleistung zu reduzieren. Dies führt zu Kosteneinsparungen bei der Herstellung der als Sender eingesetzten Geräte, da beispielsweise die Kapazität der Batterie reduziert werden kann.

Dabei werden die über den Standard definierten Layer des Protokolls (bspw. im Sinne des OSI-Schichtenmodells) eingehalten und standardkonform genutzt. Insbesondere können die hardwarenahen Layer (Physical Layer und DataLink Layer) des Standards bspw. für das Vorsehen von Prüfwerten (bspw. CRC-Werten im Rahmen eines üblichen Cyclic Redundancy Checks) mit genutzt werden.

In einer bevorzugten Ausführungsform der Erfindung ist vorgesehen, dass der Fehlerkorrekturdatensatz neben den eigentlichen Fehlerkorrekturdaten auch eine Kennung enthält. Diese Kennung beinhaltet Informationen zur Durchführung der Fehlerkorrektur, wie etwa die Art der Fehlerkorrektur und/oder Parameter, die zur Durchführung der Fehlerkorrektur benötigt werden, und/oder Informationen, welche Bestandteile des Telegramms in die Berechnung der Fehlerkorrekturdaten einbezogen wurden. Damit kann der Fehlerkorrekturdatensatz flexibel gestaltet werden und beispielsweise in Abhängigkeit der zu erzielenden Korrekturklasse unterschiedliche Längen aufweisen.

Mögliche Arten der Fehlerkorrektur beinhalten Bose-Chaudhuri-Hocquenghem-Codes (BCH), Reed-Solomon oder andere systematische Codes zur Vorwärtsfehlerkorrektur (FEC - Forward Error Correction). In systematischen Codes sind die Informationsbits in unveränderter Form Bestandteil des durch die Fehlerkorrektur erzeugten Code-Wortes, wodurch es möglich ist, bei einer fehlerfreien Übertragung die Daten auch ohne Durchführung der Fehlerkorrektur zu lesen. Dies ist im Hinblick auf eine rechenarme und damit stromsparende Dekodierung der empfangenen Funktelegramme von besonderer Bedeutung.

Es kann vorgesehen sein, in der Kennung nur eine Versionsnummer der Fehlerkorrektur zu übertragen, deren Bedeutung dem Empfänger des Telegramms bekannt ist. Der Empfänger kann bspw. eine Tabelle vorhalten, die für jede Versionsnummer die Art der Fehlerkorrektur, wie bspw. das verwendete Polynom, und sämtliche zur Durchführung der Fehlerkorrektur nötigen Parameter enthält. Damit können mehrere Bytes bei der Übertragung der Kennung selbst gespart werden, weil nicht sämtliche Informationen in Klartext übertragen werden müssen.

Zur Lokalisierung der Kennung kann die Kennung des Fehlerkorrekturdatensatzes selbst an einer definierten Position hinsichtlich des Telegrammendes angeordnet sein, entweder zusätzlich der Position des Fehlerkorrekturdatensatzes oder als Position des Fehlerkorrekturdatensatzes. Damit kann die Kennung als erstes, insbesondere auch unabhängig von den eigentlichen Fehlerkorrekturdaten, lokalisiert werden. So ist es auch möglich, dass ausgehend von Informationen in dieser Kennung die Position der restlichen Fehlerkorrekturdaten im Telegramm bestimmt wird, sofern darin entsprechende Informationen enthalten sind. Eine solche Information kann sich bspw. aus der Art der Korrektur ergeben, die die Anzahl der Bits für die Fehlerkorrekturdaten festlegt und damit den Platzbedarf an Bits in dem Telegramm definiert. Hieraus können sich auch Rückschlüsse über die Position ergeben, bspw. wenn die Fehlerkorrekturdaten unmittelbar vor oder nach der Kennung angeordnet sind. In diesem Fall ergibt sich aus der Position der Kennung auch die Position des Fehlerkorrekturdatensatzes, so dass die Position der Kennung die Position des Fehlerkorrekturdatensatzes ist.

Stehen dem Empfänger neben den eigentlichen Daten, also insbesondere den im Standard festgelegten Nutzdaten sowie ggf. weiteren herstellerspezifischen Daten, auch die Fehlerkorrekturdaten zur Verfügung, so ist es trotz Übertragungsfehler entweder in den Nutzdaten oder in den Fehlerkorrekturdaten möglich, das fehlerfreie Telegramm zu rekonstruieren. Dazu ist es allerdings nötig, dass dem Empfänger die Art der Fehlerkorrektur und die dafür benötigten Parameter bekannt sind.

Da diese Informationen in der Kennung der Fehlerkorrektur übertragen werden, wäre es nicht möglich, einen Fehler in der Kennung selbst zu beheben. Es ist deshalb in einer bevorzugten Ausführung der Erfindung vorgesehen, dass die Kennung eine eigene Fehlerkorrektur aufweist. Dazu sind in der Kennung eigene Kennungs-Fehlerkorrekturdaten vorgesehen. Wenn beispielsweise die auch als FEC-Header bezeichnete Kennung 1 Byte = 8 Bits umfasst, können 3 Bits für die eigentlichen Kennung und weitere 3 Bits für Kennungs-Fehlerkorrekturdaten vorgesehen sein. Diese Kennungs-Fehlerkorrekturdaten werden auch als FEC Parity Bits bezeichnet. Diese eigene Fehlerkorrektur der Kennung ist erfindungsgemäß vollständig unabhängig von der Fehlerkorrektur des übrigen Telegramms, insbesondere also der Nutzdaten. Dabei kann vorgesehen sein, die in der Kennung verwendete Fehlerkorrektur während der Nutzungsdauer des Verfahrens nicht zu verändern, damit alle Empfangssysteme davon ausgehen können, dass es nur einen Typ der Fehlerkorrektur in der Kennung gibt.

In einer Ausführungsform der Erfindung kann vorgesehen sein, die Daten verschlüsselt zu übermitteln. Dazu werden die zu übertragenden Daten in verschlüsselter Form im Telegramm übertragen. Die Fehlerkorrekturdaten werden vorzugsweise basierend auf den bereits verschlüsselten Daten bestimmt und selbst nicht mehr verschlüsselt. Dies ist nicht nötig, da es nicht möglich ist, die ursprünglichen Daten aus den Fehlerkorrekturdaten zu bestimmen, da diese nur die Daten in verschlüsselter Form rekonstruieren können. Auch die Kennung wird erfindungsgemäß nicht verschlüsselt, da am Empfänger Kennung und Fehlerkorrekturdaten vor der Entschlüsselung ausgewertet werden müssen, um vorab eine Fehlerkorrektur durchführen zu können, sofern ein Fehler bei der Funkübertragung aufgetreten ist.

Es ist vorgesehen, dass der definierte Standard das Einbetten von Prüfwerten in das Telegramm vorsieht, indem nach einem Datenblock mit Daten und/oder herstellerspezifischen Daten, d.h. also den zuvor bereits definierten Nutzdaten, ein Prüfblock mit jeweils einem zugeordneten Prüfwert für den vorangegangenen Datenblock eingefügt wird, wobei der Fehlerkorrekturdatensatz oder zumindest die Fehlerkorrekturdaten des Fehlerkorrekturdatensatzes in einen separaten Datenblock integriert sind. Als separater Datenblock in diesem Sinne wird ein Datenblock bezeichnet, der außer den Fehlerkorrekturdaten sowie ggf. der Kennung für die Fehlerkorrektur keine weiteren Daten, insbesondere keine Nutzdaten, enthält. Auch für diesen separaten Datenblock ist ein eigener Prüfblock mit Prüfwert vorgesehen.

Ein Beispiel für das Einbetten von Prüfwerten in das Telegramm ist das Vorsehen von CRC-Blöcken in dem Standardtelegramm. Dabei ist nach einer bestimmten Anzahl von Bytes, die die eigentlichen zu übertragenden Daten (insbesondere Nutzdaten bzw. Payload) beinhalten, eine bestimmte Anzahl von CRC-Bytes als Prüfwert in einem Prüfblock vorgesehen, um eine sogenannte zyklische Redundanzprüfung durchzuführen. Damit kann am Empfänger erkannt werden, ob die Übertragung fehlerbehaftet ist oder nicht. So ist es möglich, eine Fehlerkorrektur mit den Fehlerkorrekturdaten nur dann durchzuführen, wenn ein Übertragungsfehler aufgetreten ist. Zumindest die Fehlerkorrekturdaten, ggf. auch zusammen mit der Kennung, sind dann in einen eigenen CRC-Block zusammengefasst.

Gemäß der Erfindung werden die Fehlerkorrekturdaten mit sämtlichen Datenblöcken des Telegramms einschließlich den diesen zugehörigen Prüfblöcken, mit Ausnahme des Fehlerkorrekturdatensatzes selbst und dem dem Fehlerkorrekturdatensatz zugeordneten Prüfblock, berechnet. Damit ist der maximal mögliche Anteil des Telegramms durch die Fehlerkorrektur geschützt, wodurch eine besonders hohe Wahrscheinlichkeit besteht, dass der Empfänger das fehlerfreie Telegramm aus den empfangenen Daten rekonstruieren kann.

Eine Möglichkeit zur definierten Positionierung des Fehlerkorrekturdatensatzes besteht darin, diesen in dem letzten Datenblock vor dem Ende des Telegramms anzuordnen. Gemäß vieler Standards ist vorgesehen, dass dieser letzte (separate) Datenblock in seiner Länge variabel gewählt werden kann, auch wenn dieser letzte Datenblock mit einem eigenem Prüfwert und Prüfblock versehen wird. Dies hilft dabei, die Länge des Datentelegramms so kurz wie möglich zu halten. Auch die Kennung des Fehlerkorrekturdatensatzes selbst kann an definierter Position dieses letzten Datenblocks angeordnet sein, vorzugsweise am Anfang oder am Ende des separaten Datenblocks, wobei ggf. auch nur die Position der Kennung und die relative Position des Fehlerkorrekturdatensatzes (insbesondere der Fehlerkorrekturdaten selbst) bekannt ist.

Da die Kennung gemäß einer bevorzugten Ausführungsform des vorgeschlagenen Verfahrens ihre eigene Fehlerkorrektur besitzt, ist es auch möglich, die Kennung des Fehlerkorrekturdatensatzes außerhalb des separaten (insbesondere letzten) Datenblocks im proprietären Bereich des Telegramms anzuordnen, bspw. unmittelbar vor dem letzten Prüfblock vor dem separaten Datenblock. Auch diese Position kann relativ zu dem Telegrammende definiert vorgegeben werden, da die Größe der Fehlerkorrekturdaten, d.h. die Anzahl der dafür verwendeten Bits, üblicher Weise definiert ist. Somit kann ein Empfänger auch an dieser Position gezielt auf die Kennung des Fehlerkorrekturdatensatzes zugreifen. Hierdurch kann die Länge des gesamten Telegramms dann weiter verkürzt werden, wenn die zu übertragenden Daten den letzten Datenblock vor dem separaten Datenblock nicht vollständig auffüllen.

Wenn die zu übertragenden Daten den letzten Datenblock vor dem separaten Datenblock nicht vollständig auffüllen, kann erfindungsgemäß zusätzlich oder alternativ vorgesehen sein, diese nicht benötigten Bits des Datenblock (die nach ggf. einer Positionierung der Kennung in diesem Bereich trotzdem verbleiben), insbesondere des proprietären Bereichs, mit Padding-Daten aufzufüllen, damit der Fehlerkorrekturdatensatz und/oder die Fehlerkorrekturdaten des Fehlerkorrekturdatensatzes in dem separaten Datenblock angeordnet werden und nicht in diesem nicht genutzten Bereich des vorangegangenen Datenblocks. Padding-Daten sind Füllbytes und/oder Füllbits, die einen Datenbereich auffüllen, ohne inhaltliche Informationen zu liefern. Daher ist es besonders sinnvoll, bspw. die Kennung in den nicht genutzten proprietären Bereich des Telegramms auszulagern, um die Zahl der Padding-Daten und die Gesamt-Telegrammlänge zu reduzieren. Ggf. können anstelle von (inhaltlich nutzlosen) Padding-Daten auch weitere Daten, bspw. über den Batteriestatus des Messgeräts, Wertehistorien, andere Statusdaten, Fehlermeldungen und/oder sonstige in den Messgeräten vorhandene Informationen übertragen werden.

Eine besonders bevorzugte Ausgestaltung und Verwendung des Verfahrens betrifft die Übertragung von Gebäudeverbrauchs-, Gebäudesensordaten und/oder Gebäudeaktordaten innerhalb eines Gebäudefunknetzes. Derartige Gebäudefunknetze werden bspw. bei der Wasser-, Wärmemengen- und/oder Heizkostenerfassung und/oder bei der Steuerung von Gebäudekomponenten, bspw. von Heizungs- und/oder Kühlanlagen, verwendet.

Die Erfindung betrifft außerdem eine Vorrichtung zur Funkübertragung von Daten mit einem Funksender, mit einem Datenspeicher zur Speicherung der zu übertragenden Daten und mit einer Recheneinheit, die dazu eingerichtet ist, ein Telegramm in der vorbeschriebenen Weise zusammenzustellen und durch den Funksender zu versenden.

Zur Versendung von Daten nach dem beschriebenen Verfahren wird das zu versendende Telegramm in der als Sender eingesetzten Vorrichtung zusammengestellt. Dies kann bspw. wie folgt ablaufen:
Zuerst werden die Verbrauchs-, Sensor-, Aktor- und/oder andere Daten für die im Standard vorgesehenen Datenpunkte des Telegramms bereitgestellt. Außerdem werden im proprietären Bereich die vom Hersteller zusätzlich vorgesehenen Daten als herstellerspezifische Daten vorzugsweise in vom Hersteller vorgegebenen Datenpunkten bereitgestellt. Daraufhin können diese Daten gegebenenfalls ganz oder teilweise verschlüsselt werden. Die so bereitgestellten (verschlüsselten und/oder unverschlüsselten) Daten werden dann an den vorgesehenen Datenpunkten in die Datenblöcke des Telegramms eingestellt, wobei als nächstes - vorzugsweise datenblockweise - Prüfwerte ermittelt und in die Prüfblöcke eingestellt werden.

Anschließen werden die Fehlerkorrekturdaten (bspw. als weitere herstellerspezifische Daten) mit der designierten Methode zur Fehlerkorrektur (entsprechend der Information in der Kennung) berechnet. Die Fehlerkorrekturdaten können aus dem gesamten Telegramm (einschließlich Header und/oder Prüfblöcken), mit Ausnahme des Bereichs der Fehlerkorrekturdaten selbst und deren Prüfblock (d.h. des separaten Datenblocks), berechnet werden.

Die dadurch erhaltenen Fehlerkorrekturdaten werden im proprietären Bereich bereitgestellt. Gemeinsam mit den Fehlerkorrekturdaten wird die Kennung, welche Informationen zur Fehlerkorrektur enthält, im proprietären Bereich bereitgestellt, wobei die Fehlerkorrekturdaten und/oder die Kennung an einer definierten Position bezüglich des Telegrammendes positioniert werden. Dies kann beispielsweise die Position direkt vor den letzten Prüfblock am Telegrammende sein. Hierdurch ist die Position des Fehlerkorrekturdatensatzes in jedem Fall relativ zu dem Ende des Telegramms bekannt.

Um sicherzustellen, dass mögliche Fehler in der Kennung auch unabhängig von der durch das Empfangen der Kennung erst ermöglichten Fehlerkorrektur korrigiert werden können, wird die Kennung bevorzugt selbst mit einer eigenen Fehlerkorrektur ausgestattet. Die Gesamtlänge des sich ergebenden Telegramms, inklusive der vom Standard vorgeschriebenen Datenpunkte und des (insbesondere herstellerspezifischen) Datenpunktes mit den Fehlerkorrekturdaten, wird in das Längenfeld im Kopf des Telegramms (Header) eingestellt. Dieser Wert erlaubt es, das Telegrammende zu ermitteln und so gezielt auf den relativ zum Telegrammende positionierten Fehlerkorrekturdatensatz, d.h. die Fehlerkorrekturdaten und/oder die Kennung, zuzugreifen. Das derart zusammengestellte Telegramm wird daraufhin versendet.

Die Erfindung betrifft außerdem eine Vorrichtung zur Funkübertragung von Daten mit einem Funkempfänger, mit einem Datenspeicher zur Speicherung der übertragenen Daten und mit einer Recheneinheit, die dazu eingerichtet ist, ein wie vorbeschrieben zusammengestelltes und versendetes Telegramm zu empfangen und mit Hilfe des Fehlerkorrekturdatensatzes Übertragungsfehler im Telegramm zu korrigieren, wobei die vorbeschriebenen Vorrichtungen zum Senden und Empfangen erfindungsgemäß auch in einer Vorrichtung kombiniert werden können.

Zum Empfang von Daten nach dem beschriebenen Verfahren wird das ausgesendete Telegramm von einer als Empfänger ausgebildeten Vorrichtung empfangen. Dabei werden die übertragenen Daten des Telegramms wie üblich zunächst zwischengespeichert. Mit Hilfe von Prüfwerten in den Prüfblöcken, sofern diese vorgesehen sind, kann das Telegramm bspw. über eine zyklische Redundanzprüfung mit Hilfe von CRC-Bytes als Prüfwerte auf Übertragungsfehler überprüft werden. Ist bei der Übertragung des Telegramms ein Fehler aufgetreten, so wird als nächstes eine Fehlerkorrektur durchgeführt, um dadurch das ursprüngliche (fehlerfreie) Telegramm wiederherzustellen.

Dafür ist notwendig zu bestimmen, welche Fehlerkorrekturmethode verwendet wurde. Dazu wird erfindungsgemäß die Kennung mit den Informationen zu der Fehlerkorrektur ausgelesen. Aus dem Kopf des Telegramms (Header) wird die Gesamtlänge aus dem Längenfeld ausgelesen und ausgehend vom Beginn des Telegramms über die Gesamtlänge dessen Ende bestimmt. Da sich die Kennung an einer definierten Position bezüglich des Endes des Telegramms, beispielsweise direkt vor den letzten Prüfblock, befindet, kann die Kennung damit direkt lokalisiert werden.

Falls ein Fehler in der Übertragung der Kennung aufgetreten ist, so kann die Kennung mit Hilfe der kennungseigenen Fehlerkorrektur wiederhergestellt werden. Damit sind dem Empfänger die Art der Fehlerkorrektur, die Position der Fehlerkorrekturdaten, sämtliche Parameter und alle anderen für die Fehlerkorrektur notwendigen Informationen bekannt.

Daraufhin können am Empfänger die Fehlerkorrekturdaten, die sich an einer definierten Position bezüglich des Endes des Telegramms befinden, lokalisiert werden, und die Fehlerkorrektur kann durchgeführt werden. Im optimalen Fall, bspw. wenn die Übertragungsfehler ein vorgegebenes Limit für die durchgeführte Fehlerkorrektur nicht überschreiten, kann dadurch das ursprüngliche Telegramm fehlerfrei rekonstruiert werden.

Entsprechend kann die Recheneinheit der Vorrichtung gemäß einer bevorzugten Ausführungsform dazu eingerichtet sein, den Fehlerkorrekturdatensatz und/oder die Kennung des Fehlerkorrekturdatensatzes an der definierten Position relativ zu dem Ende des Telegramms auszuwerten und die Fehlerkorrektur durchzuführen, wobei ggf. auch eine eigenständige Korrektur der Kennung mittels der in der Kennung selbst enthaltenen Kennungs-Fehlerkorrekturdaten erfolgt. Diese wird dann durchgeführt, wenn im Bereich der Kennung ein Fehler aufgetreten ist.

Ferner kann die Recheneinheit dazu eingerichtet sein, die Prüfwerte eines Prüfblocks mit den Daten der zugehörigen Datenblöcke des Telegramms, bspw. mit Ausnahme des separaten Datenblocks für den Korrekturdatensatz, zu vergleichen und eine Fehlerkorrektur dann durchzuführen, wenn mindestens ein Prüfwert mit den Daten des zugehörigen Datenblocks nicht übereinstimmt.

Die Erfindung wird nachfolgend anhand von Ausführungsbeispielen und unter Bezugnahme auf die Figuren erläutert.
- Fig. 1: zeigt den Aufbau eines erfindungsgemäßen Telegramms, wie es bei dem erfindungsgemäßen Verfahren verwendet wird, gemäß einem Ausführungsbeispiel.
- Fig. 2: zeigt eine weitere Ausführungsform eines erfindungsgemäßen Telegramms, von dem nur der proprietäre Bereich dargestellt ist.
- Fig. 3: zeigt den proprietären Bereich einer weiteren Ausführungsform eines erfindungsgemäßen Telegramms, bei dem der vorletzte Datenblock mit Padding-Daten aufgefüllt ist und bei dem die Kennung in dem vorletzten Datenblock angeordnet ist.
- Fig. 4: zeigt eine Ausführungsform einer erfindungsgemäßen Kennung.

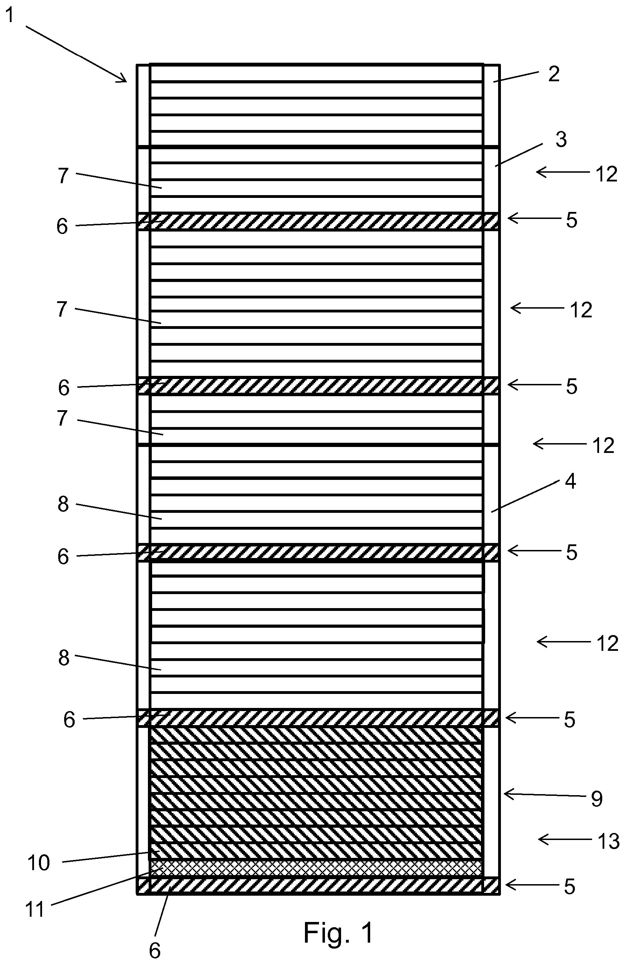

Fig. 1 zeigt ein Telegramm 1, wie es bei dem erfindungsgemäßen Verfahren in der zuvor beschriebenen Weise versendet und/oder empfangen wird, gemäß einer bevorzugten Ausführungsform nach dem OMS-Standard, der für die Übertragung von Verbrauchswerten in einem lokalen Funknetz, insbesondere einem Gebäudefunknetz, angewandt wird.

Dieses Telegramm 1 ist konform mit einem Standard für Übertragung von Verbrauchswerten, bspw. dem OMS-Standard. Jedes Telegramm 1 beginnt mit einem auch als Header bezeichneten Telegrammkopf 2, der in bekannter und in dem Standard definierter Weise Angaben über Sender, Empfänger, den Standard, die (Gesamt-) Telegrammlänge und/oder dgl. Informationen enthalten kann. Die im Telegrammkopf 2 enthaltene Telegrammlänge ist die Gesamtlänge des Telegramms 1, so wie es übertragen wird. Die Gesamtlänge schließt daher einen Standarddatenbereich 3, der dem Telegrammkopf 2 nachgelagert ist, und einen proprietären Bereich 4 ein, welcher sich wiederum an den Standarddatenbereich 3 anschließt.

Der Standarddatenbereich 3 umfasst Daten 7, die in dem OMS-Standard festgelegt sind, insbesondere eine Kennung des Messgeräts, den Verbrauchswert, den Ablesezeitpunkt und/oder dgl. Informationen. Die Länge der einzelnen Daten 7 kann bereits im Standard festgelegt sein. Es ist auch möglich, wie in dem beispielgemäßen OMS-Standard vorgesehen, dass die Länge der einzelnen Daten 7 jeweils zusammen mit dem Datenwert angegeben wird, so dass sich der Empfänger durch Auswerten der Daten 7 mit den darin enthaltenen Längenangaben von Datenwert zu Datenwert durch das Telegramm 1 durcharbeiten kann. Diese Daten 7 umfassend den Datenwert und die zugehörige Längenangabe des Datenwerts werden auch als Datenpunkte bezeichnet.

Der sich anschließende proprietäre Bereich 4 umfasst herstellerspezifische Daten 8, die jeder Hersteller eines Verbrauchserfassungsgeräts als zusätzliche, d.h. nicht gemäß dem Standard vorgesehene, Informationen übertragen kann. Diese Informationen können durch entsprechend eingerichtete Empfänger ausgewertet und verwendet werden. Grundsätzlich ist der genauso proprietäre Bereich 4 vorzugsweise genauso aufgebaut wie der Standarddatenbereich 3, wobei der Dateninhalt der Daten 8 des proprietären Bereichs 4 jedoch durch den Standard gerade nicht vorgegeben ist.

Erfindungsgemäß beinhaltet dieser proprietäre Bereich 4 neben allgemeinen herstellerspezifischen Daten 8 auch Fehlerkorrekturdaten 10 als spezielle herstellerspezifische Daten 8. Diese Fehlerkorrekturdaten 10 befinden sich in einem Fehlerkorrekturdatensatz 9, der sich von anderen Datensätzen durch bestimmte Merkmale unterscheidet, die nachfolgend erläutert werden. Erfindungsgemäß können auch einzelne dieser Merkmale oder beliebige Kombinationen dieser Merkmale in einem Telegramm gemäß der Erfindung zusammengefasst sein.

Insbesondere kann der Fehlerkorrekturdatensatz 9 als letzter (separater) Datenblock 13 vor dem Telegrammende des Telegramms angeordnet sein, d.h. insbesondere nach Datenblöcken 12 mit den Daten 7 aus dem Standarddatenbereich 3 des Telegramms 1 und den allgemeinen herstellerspezifischen Daten 8 aus dem proprietären Bereich 4 des Telegramms 1.

Die Abgrenzung der Datenblöcke 12, 13 zueinander erfolgt gemäß einer bevorzugen Ausführungsform durch Prüfblöcke 5 mit den Prüfwerten 6.

Dabei kann es sich bspw. um sog. CRC-Blöcke handeln, die als Prüfwert 6 eine CRC-Summe aus den Daten 7, 8 der jeweils vorangegangenen Datenblöcken 12 enthalten. Teilweise werden auch der eigentliche Prüfblock 5 mit dem Prüfwert 6 und der zugehörige Datenblock 12,13 zusammen als CRC-Block bezeichnet. Dieses CRC-Verfahren ist allgemein bekannt und üblicher Weise in den DataLink Layer des durch den Standard definierten Protokolls integriert. Das CRC-Verfahren muss daher an dieser Stelle nicht gesondert beschrieben werden.

Die CRC-Summen (d.h. die Prüfwerte 6 der einzelnen Prüfblöcke 5) werden derart aus den Daten 7, 8 des dem jeweiligen Prüfblock 5 zugeordneten und damit zugehörigen Datenblocks 12 gebildet, dass bei der Übertragung auftretende Bitfehler in den Daten 7, 8 mit sehr hoher Wahrscheinlichkeit erkannt werden können.

Dies gilt grundsätzlich auch für den separaten Datenblock 13 mit den Fehlerkorrekturdaten, der erfindungsgemäß bevorzugt jedoch nur den Fehlerkorrekturdatensatz 9 mit den Fehlerkorrekturdaten 10 sowie ggf. der Kennung 11 für die Fehlerkorrektur enthält.

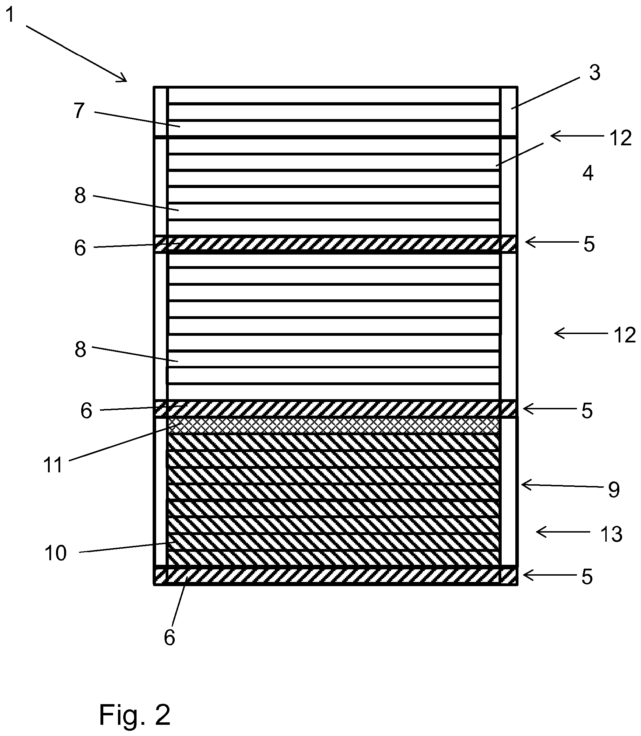

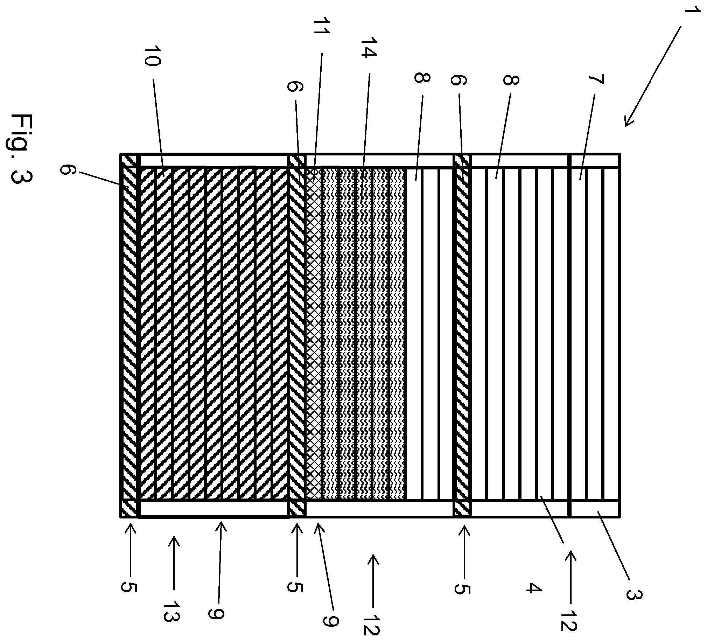

Die Länge dieses letzten separaten Datenblocks 13 entspricht vorzugsweise genau der Länge des Fehlerkorrekturdatensatzes 9 mit der Kennung 11, wie in den Ausführungsformen gemäß Fig. 1 oder Fig. 2 dargestellt, oder ohne die Kennung 11, wie später in Bezug auf andere Ausführungsformen (dargestellt in Fig. 3) noch beschrieben. Der Prüfwert 6 des Prüfblocks 5 für den letzten separaten Datenblock 13 berücksichtigt also nur Fehlerkorrekturdaten 10 sowie ggf. die Kennung 11 der Fehlerkorrektur. Somit ist auch ein Übertragungsfehler bei den Fehlerkorrekturdaten 10 erkennbar und ggf. lokalisierbar. In diesem Fall ist es möglich, die Fehlerkorrekturdaten 10 durch die anderen Daten 7, 8 zu korrigieren, falls in dem zugehörigen Datenblock 12 oder den zugehörigen Datenblöcken 12 enthaltend die Daten 7 und/oder die allgemeinen herstellerspezifischen Daten 8 kein Übertragungsfehler aufgetreten ist.

In dem Telegramm 1 wird nach einer festen Anzahl von Bytes enthaltend Daten 7, 8 also eine bestimmte Anzahl von CRC-Bytes als Prüfwert 6 übertragen, welche beim Empfang zur Verifizierung einer fehlerfreien Übertragung der vorhergehenden Bytes der Daten 7, 8 in dem Datenblock 12 genutzt werden.

In der Ausführungsform der Fig. 1 wird der Fehlerkorrekturdatensatz 5 mit den Fehlerkorrekturdaten 10 und der Kennung 11 im letzten CRC-Block (d.h. dem separaten Datenblock 13) übertragen. Dabei ist die Kennung 11 direkt vor den letzten Prüfblock 5 des gesamten Telegramms 1 angeordnet, mithin also an einer definierten Position des Telegramms 1 relativ zu dem Telegrammende. Denn die Länge eines Prüfblocks 5 mit dem Prüfwert 6 ist in Bits genau bekannt.

Der Empfänger des Telegramms 1 kann daher direkt mit Hilfe der im Kopf 2 übersandte Längeninformation das Ende des Telegramms 1 und (unter Berücksichtigung der Länge des Prüfblocks 5) somit die Position der Kennung 11 in dem Telegramm lokalisieren.

Fig. 2 zeigt eine alternative Ausgestaltung des Prüfblocks 9 in dem proprietären Bereich 4 des Telegramms 1, bei dem die Kennung 11 hinter dem vorletzten Prüfblock 5, d.h. zu Beginn des letzten (separaten) Datenblocks 13, angeordnet ist. Da die Länge des letzten Datenblocks 13 durch den Fehlerkorrekturdatensatz 9 bestimmt ist, dessen Länge in Bytes dem Empfänger bekannt ist, kann auch für diese Anordnung die Kennung 11 zuverlässig vom Empfänger lokalisiert werden, ohne dass die Positionen und Längen sämtlicher Datenpunkte 3 ausgewertet werden müssen. Auch die erste Bit- oder Byte-Position nach dem vorletzten Prüfblock 5 ist für den Empfänger genau bekannt, da die Länge der Datenblöcke 12 (mit Ausnahme des letzten Datenblocks 13) bekannt ist, so dass auch der vorletzte Prüfblock 5 in Kenntnis der Gesamtlänge des Telegramms 1 genau bestimmt werden kann.

Grundsätzlich wäre es, insbesondere wenn die Art der Fehlerkorrektur Einfluss auf die Länge der Fehlerkorrekturdaten 10 hat und daher die Länge des letzten Datenblocks 13 bestimmt, auch möglich, die Kennung in einer bestimmten Bitlänge, d.h. bspw. 40 Bits oder auch jede andere definierte Bitanzahl, vor dem Telegrammende zu positionieren, bspw. inmitten der Fehlerkorrekturdaten 10, die sich dann um die Kennung 11 gruppieren. Dies hätte den Vorteil, dass die Position der Kennung 11 dem Empfänger in dem Telegramm 1 relativ im Telegrammende immer gleich ist, so dass diese (unabhängig von der konkreten Länge der Fehlerkorrekturdaten 10) im Empfänger für jede Art der herstellerspezifischen Fehlerkorrektur immer gleich ist. Dies ist vorteilhaft, weil der Empfänger dann direkt bei der Herstellung entsprechend konfiguriert werden kann. Auch diese Ausführungsform ist Gegenstand der Erfindung, auch wenn Sie nicht in den Figuren gesondert dargestellt ist.

Fig. 3 zeigt eine weitere Ausführungsform des herstellerspezifischen Bereiches 4 des Telegramms 1, in der der Fehlerkorrekturdatensatz 9 insofern aufgeteilt ist, als er sich über den letzten separaten Datenblock 13 und den einen (mittelbar oder unmittelbar) davorliegenden Datenblock 12 aufteilt. Erfindungsgemäß ist die Aufteilung dabei derart, dass in dem letzten separaten Datenblock 12 alle Fehlerkorrekturdaten 10 angeordnet sind, die von dem Inhalt der vorherigen Datenblöcke abhängen und damit mit den Daten 7, 8 in den Datenblöcken 12 variieren. Diese sollten erfindungsgemäß immer in dem letzten Datenblock 13 angeordnet sein, der vorzugsweise ein separater Datenblock 13 in dem Sinne ist, dass dort ausschließlich mit der herstellerspezifischen Fehlerkorrektur in Verbindung stehende Daten 10, 11 angeordnet sind. Die Kennung 11 ist allerdings unabhängig von den (übrigen) Daten 7, 8 in den Datenblöcken 12, so dass die Kennung 11 der Fehlerkorrektur selbst mit einem Teil des herstellerspezifischen Bereichs 4 des Telegramms 1 angeordnet werden kann, der für andere herstellerspezifische Daten 8 nicht genutzt wird.

Die Position kann beispielsweise so gewählt werden, dass die Kennung 11 direkt vor dem vorletzten Prüfblock 5 angeordnet ist. Dieser lässt sich, wie zuvor in anderem Zusammenhang bereits beschrieben, eindeutig relativ von dem Telegrammende aus bestimmen. Es ist erfindungsgemäß natürlich auch möglich, die Kennung an einer bestimmten Bit- oder Byteposition in dem proprietären Bereich 4 vor dem vorletzten Prüfblock 5 anzuordnen, weil auch diese Position eindeutig identifizierbar ist. Bevorzug ist für diese Ausführungsform jedoch die besonders einfach handhabbare Position der Kennung 11 unmittelbar vor dem letzten Prüfblock in dem Datenblock 12, wie auch in Fig. 3 dargestellt.

Weil ein Telegramm keine leeren (d.h. nicht definierten) Bits ausweisen sollte oder darf, werden in dem letzten Datenblock 12 vor dem vorletzten Prüfblock 5 ggf. nicht gefüllte Bitfelder mit sogenannten Padding-Bits oder Padding-Bytes, bzw. allgemeiner mit sogenannte Padding-Daten 14 aufgefüllt, wie sie bespielhaft in Fig. 3 gezeigt sind, aber in den anderen Ausführungsformen in gleicher Weise verwendet werden können. Diese Fülldaten sind als Füllbytes gekennzeichnet und werden durch die Anwendung nicht dekodiert. Es wäre jedoch erfindungsgemäß auch denkbar, diese nicht gefüllten Bitfelder eines Datenblocks 12 im herstellerspezifischen Bereich zu verwenden, um weitere inhaltliche Informationen zu übertragen, die bei Bedarf sinnvoll genutzt werden können, ohne dass diese für eine Auswertung unbedingt notwendig sind. Dazu können bspw. Werte aus Datenhistorien gehören. Auch ist denkbar, bspw. die im Standarddatenbereich 3 übertragenen (d.h. die essentiellen Daten) in Reinform redundant zu übertragen, so dass bei einem Datenfehler in dem Standarddatenbereich 3 zusätzlich zu der erfindungsgemäß vorgeschlagenen herstellerspezifischen Fehlerkorrektur eine weitere Redundanz durch eine einfache Dopplung essentieller Dateninformationen erreicht werden kann. Im Rahmen von Verbrauchswerten kann hier bspw. ein Stichtagswert bzw. ein sonstiger Wert, der für die Auswertung unbedingt benötigt wird, erneut doppelt übertragen werden, um die (technisch notwendige) Telegrammlänge nicht mit sinnlosen, d.h. inhaltsleeren, Daten zu füllen.

Für alle Ausführungsformen des proprietären Bereichs 4 des Telegramms wurden zur Beschreibung dieselben Bezugszeichen verwendet, weil der Inhalt der einzelnen referenzierten Merkmale bei allen Ausführungsformen gleich ist, und sich nur deren Position im Telegramm ändert.

Das fehlerfreie Empfangen der Kennung 11 des Fehlerkorrekturdatensatze 9 ist eine Grundvoraussetzung dafür, die herstellerspezifische Fehlerkorrektur auszuführen, zumindest wenn grundsätzlich verschiedene Arten der Fehlerkorrektur in dem Übertragungsverfahren anwendbar sind, die sich aus der Kennung ergeben. Dann muss der Empfänger die Kennung 11 auswerten, damit das richtige Fehlerkorrekturverfahren angewendet werden kann.

Hierauf kann nur verzichtet werden, wenn der Empfänger auch ohne Auswerten einer Kennung 11 erkennen kann, welcher herstellerspezifische Fehlerkorrektur angewendet werden soll. Dies wäre beispielsweise der Fall, wenn nur eine genau definierte Fehlerkorrektur angewendet wird oder die Art der Fehlerkorrektur aufgrund anderer Informationen aus dem Telegramm, bspw. der Gesamttelegrammlänge, abgeleitet werden kann.

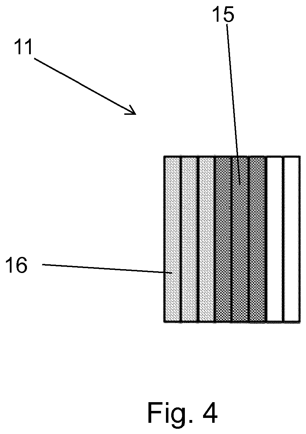

Für den Fall, dass für die Anwendung der erfindungsgemäß vorgeschlagen Fehlerkorrektur bei der Funkübertragung von Daten 7, 8, 10 eine Kennung 11 erforderlich ist, ist es daher sinnvoll, dass die Kennung 11 eigene Kennungs-Fehlerkorrekturdaten 15 zur eigenständigen Fehlerkorrektur der Kennung 11 aufweist. Dies ist beispielhaft in Fig. 4 veranschaulicht.

Dort ist eine Kennung 11 mit insgesamt 8 Bits (d.h. ein Kennungs-byte) mit Kennungsdaten 16 dargestellt, welche die Art der Kennung beschreiben, durch den Empfänger direkt auslesbar sind und die Informationen zur Durchführung der Fehlerkorrektur enthalten. Hierfür werden 3 Bits verwendet. Anschließend an die Kennungsdaten 16 sind die Kennungs-Fehlerkorrekturdaten 15 vorgesehen, welche auf Basis der Kennungsdaten 16 berechnet sind und in einem Fehlerfall aufgrund einer Redundanz die Rekonstruktion der Kennungsdaten 16 erlauben. Auch hierfür kann ein übliches FEC-Verfahren verwendet werden. Dieses ist erfindungsgemäß eindeutig vordefiniert und kann daher ohne weitere Parametrierung verwendet werden. In einer Gerätegeneration sollte dieses Verfahren nicht mehr geändert werden, so dass alle Geräte untereinander kompatibel sind. Auch für die Kennungs-Fehlerkorrekturdaten 15 sind 3 Bits vorgesehen.

Die restlichen, in Fig. 4 nicht gekennzeichneten Bits, können anderweitig verwendet werden, bspw. für einen Prüfwert zum Erkennen von Übertragungsfehlern, analog dem bereits beschriebenen Verfahren für die Prüfblöcke 5. Damit ist die Kennung 11 in dem Telegramm 1 erfindungsgemäß völlig autark im Hinblick auf eine Erkennung und Behebung von Übertragungsfehlern.

### Bezugszeichenliste:

- 1: Telegramm
- 2: Telegrammkopf
- 3: Standarddatenbereich
- 4: proprietärer Bereich
- 5: Prüfdatenblock
- 6: Prüfwert
- 7: Daten
- 8: herstellerspezifische Daten
- 9: Fehlerkorrekturdatensatz
- 10: Fehlerkorrekturdaten
- 11: Kennung
- 12: Datenblock
- 13: separater Datenblock
- 14: Padding-Daten
- 15: Kennungs-Fehlerkorrekturdaten

## Patentansprüche

1. Verfahren zur Funkübertragung von Daten, bei dem die Daten in einem Telegramm (1) entsprechend einem definierten Standard versendet und empfangen werden, wobei der Standard durch Protokolle für die Funkübertagung einschließlich der Festlegung der Telegramme vorgegeben ist, wobei das Verfahren die folgenden Schritte umfasst:
- Zusammenstellen, durch eine Recheneinheit einer Vorrichtung mit einem Funksender, des Telegrammes (1), wobei
der definierte Standard in dem Telegramm (1) einen Standarddatenbereich (3) zum Übertragen von Daten (7), einen proprietären Bereich (4) zum Übertragen von herstellerspezifischen Daten (8) und das Einbetten von Prüfwerten (6) in das Telegramm (1) vorsieht, indem nach einem Datenblock (12) mit einer bestimmten Anzahl von Bytes mit Daten (7) und/oder herstellerspezifischen Daten (8) ein Prüfblock (5) mit einer bestimmten Anzahl von CRC-Bytes mit jeweils dem zugeordneten Prüfwert (6) für den vorangegangenen Datenblock (12) eingefügt wird;
der definierte Standard kein Fehlerkorrekturverfahren vorsieht;
in dem proprietären Bereich (4) ein Fehlerkorrekturdatensatz (9) mit Fehlerkorrekturdaten (10) für das Telegramm (1) übermittelt wird, welche aufgrund einer Redundanz eine Fehlerkorrektur der Daten (7) und/oder der herstellerspezifischen Daten (8) bei Übertragungsfehlern zulassen;
dieser Fehlerkorrekturdatensatz (9) an einer relativ zu dem durch die Gesamtlänge des Telegramms (1) bestimmten Ende des Telegramms (1) definierten Position des Telegramms (1) angeordnet wird;
der Fehlerkorrekturdatensatz (9) in einen separaten Datenblock (13) mit einem eigenen Prüfblock (5) mit eigenem Prüfwert (6) integriert ist und die Abgrenzung der mehreren Datenblöcke (12, 13) zueinander durch die Prüfblöcke (5) mit den Prüfwerten (6) erfolgt;
die Fehlerkorrekturdaten (10) aus sämtlichen Datenblöcken (12) des Telegramms (1) einschließlich den diesen zugehörigen Prüfblöcken (5), ausgenommen dem Fehlerkorrekturdatensatz (9) selbst und dem dem Fehlerkorrekturdatensatz (9) zugeordneten Prüfblock (5), berechnet werden;
- Versenden, mittels der Recheneinheit durch den Funksender, des zusammengestellten Telegramms;
- Empfang, mittels einer Recheneinheit einer Vorrichtung mit einem Funkempfänger durch den Funkempfänger, des versendeten Telegramms, wobei
nach dem definierten Standard in dem empfangenen Telegramm eine zyklische Redundanzprüfung durchgeführt wird, und
eine Fehlerkorrektur durchgeführt wird, wenn bei der zyklischen Redundanzprüfung mittels der CRC-Bytes als Prüfwerte (6) ein Übertragungsfehler festgestellt wird, wozu die Prüfwerte (6) des Prüfblocks (5) mit den Daten (7, 8, 10) der zugehörigen Datenblöcke (12, 13) verglichen werden und die Fehlerkorrektur dann durchgeführt wird, wenn mindestens ein Prüfwert (6) mit den Daten (7, 8, 10) des zugehörigen Datenblocks (12, 13) nicht übereinstimmt.

2. Verfahren zur Funkübertragung von Daten nach Anspruch 1, **dadurch gekennzeichnet, dass** der Fehlerkorrekturdatensatz (9) neben den Fehlerkorrekturdaten (10) eine Kennung (11) enthält, wobei die Kennung (11) Informationen zur Durchführung der Fehlerkorrektur enthält.

3. Verfahren nach Anspruch 2, **dadurch gekennzeichnet, dass** die Kennung (11) des Fehlerkorrekturdatensatzes (9) an einer relativ zu dem Ende des Telegramms (1) definierten Position des Telegramms (1) angeordnet ist.

4. Verfahren zur Funkübertragung von Daten nach Anspruch 2 oder 3, **dadurch gekennzeichnet, dass** die Kennung (11) eine eigene Fehlerkorrektur mit Kennungs-Fehlerkorrekturdaten (15) zur Korrektur der Kennung (11) enthält.

5. Verfahren zur Funkübertragung von Daten nach einem der vorhergehenden Ansprüche, **dadurch gekennzeichnet, dass** der Fehlerkorrekturdatensatz (9) oder die Fehlerkorrekturdaten (10) des Fehlerkorrekturdatensatzes (9) in dem separaten Datenblock (13) vor dem Ende des Telegramms angeordnet werden.

6. Verfahren zur Funkübertragung von Daten nach einem der vorhergehenden Ansprüche 2 bis 4, **dadurch gekennzeichnet, dass** die Kennung (11) des Fehlerkorrekturdatensatzes (9) am Anfang oder am Ende des separaten Datenblocks (13) angeordnet wird.

7. Verfahren zur Funkübertragung von Daten nach einem der vorhergehenden Ansprüche 2 bis 4 oder 6, **dadurch gekennzeichnet, dass** die Kennung (11) des Fehlerkorrekturdatensatzes (9) außerhalb des separaten Datenblocks (13) im proprietären Bereich (4) des Telegramms (1) angeordnet wird.

8. Verfahren nach einem der vorhergehenden Ansprüche, **dadurch gekennzeichnet, dass** ein Datenblock (12) im proprietären Bereich mit Padding-Daten (14) aufgefüllt wird, damit der Fehlerkorrekturdatensatz (9) und/oder die Fehlerkorrekturdaten (10) des Fehlerkorrekturdatensatzes (9) in dem separaten Datenblock (13) angeordnet werden.

9. Verfahren zur Funkübertragung von Daten nach einem der vorhergehenden Ansprüche, **dadurch gekennzeichnet, dass** bei einem Übertragungsfehler bei den Fehlerkorrekturdaten (10) eine Korrektur durch die anderen Daten (7, 8) erfolgt, falls in dem zugehörigen Datenblock (12) enthaltend die Daten (7, 8) kein Übertragungsfehler aufgetreten ist.

10. Verwendung des Verfahrens nach einem der vorhergehenden Ansprüche für die Übertragung von Gebäudeverbrauchs-, Gebäudesensor- und/oder Gebäudeaktordaten innerhalb eines Gebäudefunknetzes.

11. Vorrichtung zur Funkübertragung von Daten mit einem Funksender, mit einem Datenspeicher zur Speicherung der zu übertragenden Daten und mit einer Recheneinheit, wobei die Recheneinheit dazu eingerichtet ist, ein entsprechend dem Verfahren der Ansprüche 1 bis 9 definiertes Telegramm (1) nach dem Zusammenstellungsschritt der Ansprüche 1 bis 9 zusammenzustellen und durch den Funksender zu versenden.

12. Vorrichtung zur Funkübertragung von Daten mit einem Funkempfänger, mit einem Datenspeicher zur Speicherung der übertragenen Daten und mit einer Recheneinheit, wobei die Recheneinheit dazu eingerichtet ist zum: Empfangen eines Telegramms (1) gemäß dem Empfangsschritt in dem Verfahren der Ansprüche 1 bis 9, wobei das Telegramm (1) von einer Recheneinheit einer Vorrichtung mit einem Funksender gemäß dem Zusammenstellungsschritt in dem Verfahren nach einem der Ansprüche 1 bis 9 zusammengestellt wird.

13. Vorrichtung nach Anspruch 12, **dadurch gekennzeichnet, dass** die Recheneinheit weiter dazu eingerichtet ist, bei der Durchführung der Fehlerkorrektur den Fehlerkorrekturdatensatz (9) und/oder die eine Kennung (11) des Fehlerkorrekturdatensatzes (9) an der definierten Position relativ zu dem durch die Gesamtlänge des Telegramms (1) bestimmten Ende des Telegramms (1) auszuwerten.

## Claims

1. Method for radio transmission of data, wherein the data is sent and received in a telegram (1) according to a defined standard, wherein the standard is predefined by protocols for the radio transmission including the definition of the telegrams, the method having the following steps:
- Compilation, by a computing unit of an apparatus with a radio transmitter, of the telegram (1), wherein
the defined standard in the telegram (1) provides a standard data area (3) for transmitting data (7), a proprietary area (4) for transmitting manufacturer-specific data (8) and the embedding of check values (6) in the telegram (1), in that after a data block (12) with a specific number of bytes with data (7) and/or manufacturer-specific data (8), a check block (5) with a specific number of CRC bytes is inserted with each assigned check to the value (6) for the preceding data block (12);
the defined standard does not provide for an error correction procedure;
an error correction data set (9) with error correction data (10) for the telegram (1) is transmitted in the proprietary area (4), which allows error correction of the data (7) and/or the manufacturer-specific data (8) in the event of transmission errors due to redundancy;
this error correction data set (9) is arranged at a position of the telegram (1) defined relative to the end of the telegram (1) identified by the overall length of the telegram (1);
the error correction data set (9) is integrated into a separate data block (13) with its own check block (5) with its own check value (6), and the multiple data blocks (12, 13) are delimited from one another by the check blocks (5) with the check values (6);
the error correction data (10) is calculated from all data blocks (12) of the telegram (1) including the associated check blocks (5), with the exception of the error correction data set (9) itself and the check block (5) assigned to the error correction data set (9);
- Transmission of the compiled telegram by the radio transmitter using the computing unit;
- reception, by means of a computing unit of an apparatus with a radio receiver by the radio receiver, of the transmitted telegram, wherein
a cyclic redundancy check is carried out in the received telegram according to the defined standard, and
an error correction is carried out if a transmission error is detected during the cyclic redundancy check using the CRC bytes as check values (6), for which purpose the check values (6) of the check block (5) are compared with the data (7, 8, 10) of the associated data blocks (12, 13) and the error correction is carried out if at least one check value (6) does not match the data (7, 8, 10) of the associated data block (12, 13).

2. Method for radio transmission of data according to claim 1, **characterized in that** the error correction data set (9) contains an identifier (11) in addition to the error correction data (10), wherein the identifier (11) contains information for performing the error correction.

3. Method according to claim 2, **characterized in that** the identifier (11) of the error correction data set (9) is arranged at a position of the telegram (1) defined relative to the end of the telegram (1).

4. Method for radio transmission of data according to claim 2 or 3, **characterized in that** the identifier (11) contains its own error correction with identifier error correction data (15) for correcting the identifier (11).

5. Method for radio transmission of data according to one of the preceding claims, **characterized in that** the error correction data set (9) or the error correction data (10) of the error correction data set (9) are arranged in the separate data block (13) before the end of the telegram.

6. Method for radio transmission of data according to any one of the preceding claims 2 to 4, **characterized in that** the identifier (11) of the error correction data set (9) is arranged at the beginning or at the end of the separate data block (13).

7. Method for radio transmission of data according to one of the preceding claims 2 to 4 or 6, **characterized in that** the identifier (11) of the error correction data set (9) is arranged outside the separate data block (13) in the proprietary area (4) of the telegram (1).

8. Method according to one of the preceding claims, **characterized in that** a data block (12) in the proprietary area is padded with padding data (14) so that the error correction data set (9) and/or the error correction data (10) of the error correction data set (9) are arranged in the separate data block (13).

9. Method for radio transmission of data according to one of the preceding claims, **characterized in that**, in the event of a transmission error in the error correction data (10), a correction is made by the other data (7, 8) if no transmission error has occurred in the associated data block (12) containing the data (7, 8).

10. Use of the method according to any one of the preceding claims for the transmission of building consumption, building sensor and/or building actuator data within a building radio network.

11. Apparatus for the radio transmission of data, having a radio transmitter, having a data memory for storing the data to be transmitted and having a computing unit, wherein the computing unit is adapted to compile a telegram (1) defined in accordance with the method of claims 1 to 9 after the compiling step of claims 1 to 9 and to send it by the radio transmitter.

12. Apparatus for radio transmission of data comprising a radio receiver, a data memory for storing the transmitted data and a computing unit, wherein the computing unit is adapted to: Receiving a telegram (1) according to the receiving step in the method of claims 1 to 9, wherein the telegram (1) is compiled by a computing unit of an apparatus with a radio transmitter according to the compiling step in the method according to any one of claims 1 to 9.

13. Apparatus according to claim 12, **characterized in that** the computing unit is further adapted to evaluate the error correction data set (9) and/or the one identifier (11) of the error correction data set (9) at the defined position relative to the end of the telegram (1) identified by the total length of the telegram (1) when performing the error correction.

## Revendications

1. Procédé de transmission radio de données, dans lequel les données sont envoyées et reçues dans un télégramme (1) selon une norme définie, la norme étant prédéfinie par les protocoles de transmission radio, y compris la définition des télégrammes, le procédé comportant les étapes suivantes :
- Compilation, par une unité de calcul d'un appareil doté d'un émetteur radio, du télégramme (1), dans lequel
la norme définie dans le télégramme (1) prévoit une zone de données standard (3) pour la transmission de données (7), une zone propriétaire (4) pour la transmission de données spécifiques au fabricant (8) et l'intégration de valeurs de contrôle (6) dans le télégramme (1), en ce sens qu'après un bloc de données (12) avec un nombre spécifique d'octets contenant des données (7) et/ou des données spécifiques au fabricant (8), un bloc de contrôle (5) avec un nombre spécifique d'octets CRC est inséré avec chaque contrôle attribué à la valeur (6) pour le bloc de données précédent (12) ;
la norme définie ne prévoit pas de procédure de correction des erreurs ;
un ensemble de données de correction d'erreurs (9) contenant des données de correction d'erreurs (10) pour le télégramme (1) est transmis dans la zone propriétaire (4), ce qui permet de corriger les erreurs des données (7) et/ou des données spécifiques au fabricant (8) en cas d'erreurs de transmission dues à la redondance ;
cet ensemble de données de correction d'erreur (9) est disposé à une position du télégramme (1) définie par rapport à la fin du télégramme (1) identifiée par la longueur totale du télégramme (1) ;
l'ensemble de données de correction d'erreur (9) est intégré dans un bloc de données distinct (13) avec son propre bloc de contrôle (5) avec sa propre valeur de contrôle (6), et les blocs de données multiples (12, 13) sont délimités les uns des autres par les blocs de contrôle (5) avec les valeurs de contrôle (6) ;
les données de correction d'erreur (10) sont calculées à partir de tous les blocs de données (12) du télégramme (1), y compris les blocs de contrôle associés (5), à l'exception de l'ensemble de données de correction d'erreur (9) lui-même et du bloc de contrôle (5) affecté à l'ensemble de données de correction d'erreur (9) ;
- Transmission du télégramme compilé par l'émetteur radio à l'aide de l'unité de calcul ;
- réception, au moyen d'une unité de calcul d'un appareil doté d'un récepteur radio par le récepteur radio, du télégramme transmis, dans lequel
un contrôle de redondance cyclique est effectué dans le télégramme reçu conformément à la norme définie, et
une correction d'erreur est effectuée si une erreur de transmission est détectée pendant le contrôle de redondance cyclique utilisant les octets CRC comme valeurs de contrôle (6) ; à cette fin, les valeurs de contrôle (6) du bloc de contrôle (5) sont comparées aux données (7, 8, 10) des blocs de données associés (12, 13) et la correction d'erreur est effectuée si au moins une valeur de contrôle (6) ne correspond pas aux données (7, 8, 10) du bloc de données associé (12, 13).

2. Procédé de transmission radio de données selon la revendication 1, **caractérisé en ce que** l'ensemble de données de correction d'erreur (9) contient un identifiant (11) en plus des données de correction d'erreur (10), l'identifiant (11) contenant des informations pour effectuer la correction d'erreur.

3. Procédé selon la revendication 2, **caractérisé en ce que** l'identificateur (11) de l'ensemble de données de correction d'erreur (9) est disposé à une position du télégramme (1) définie par rapport à la fin du télégramme (1).

4. Procédé de transmission radio de données selon la revendication 2 ou 3, **caractérisé en ce que** l'identifiant (11) contient sa propre correction d'erreur avec des données de correction d'erreur d'identifiant (15) pour corriger l'identifiant (11).

5. Procédé de transmission radio de données selon l'une des revendications précédentes, **caractérisé en ce que** l'ensemble de données de correction d'erreurs (9) ou les données de correction d'erreurs (10) de l'ensemble de données de correction d'erreurs (9) sont disposés dans le bloc de données séparé (13) avant la fin du télégramme.

6. Procédé de transmission radio de données selon l'une quelconque des revendications précédentes 2 à 4, **caractérisé en ce que** l'identifiant (11) de l'ensemble de données de correction d'erreurs (9) est disposé au début ou à la fin du bloc de données séparé (13).

7. Procédé de transmission radio de données selon l'une des revendications précédentes 2 à 4 ou 6, **caractérisé en ce que** l'identifiant (11) de l'ensemble de données de correction d'erreurs (9) est disposé en dehors du bloc de données séparé (13) dans la zone propriétaire (4) du télégramme (1).

8. Procédé selon l'une des revendications précédentes, **caractérisé en ce qu'**un bloc de données (12) dans la zone propriétaire est garni de données de remplissage (14) de sorte que l'ensemble de données de correction d'erreur (9) et/ou les données de correction d'erreur (10) de l'ensemble de données de correction d'erreur (9) sont disposées dans le bloc de données séparé (13).

9. Procédé de transmission radio de données selon l'une des revendications précédentes, **caractérisé en ce que**, en cas d'erreur de transmission dans les données de correction d'erreur (10), une correction est effectuée par les autres données (7, 8) si aucune erreur de transmission ne s'est produite dans le bloc de données associé (12) contenant les données (7, 8).

10. Utilisation du procédé selon l'une quelconque des revendications précédentes pour la transmission de données de consommation du bâtiment, de capteurs du bâtiment et/ou d'actionneurs du bâtiment au sein d'un réseau radio du bâtiment.

11. Appareil pour la transmission radio de données, comportant un émetteur radio, comportant une mémoire de données pour stocker les données à transmettre et comportant une unité de calcul, dans lequel l'unité de calcul est adaptée pour compiler un télégramme (1) défini selon le procédé des revendications 1 à 9 après l'étape de compilation des revendications 1 à 9 et pour l'envoyer par l'émetteur radio.

12. Appareil pour la transmission radio de données comprenant un récepteur radio, une mémoire de données pour stocker les données transmises et une unité de calcul, dans lequel l'unité de calcul est adaptée pour : Recevoir un télégramme (1) selon l'étape de réception dans le procédé des revendications 1 à 9, le télégramme (1) étant compilé par une unité de calcul d'un appareil avec un émetteur radio selon l'étape de compilation dans le procédé selon l'une quelconque des revendications 1 à 9.

13. Appareil selon la revendication 12, **caractérisé en ce que** l'unité de calcul est en outre adaptée pour évaluer l'ensemble de données de correction d'erreur (9) et/ou l'un des identificateurs (11) de l'ensemble de données de correction d'erreur (9) à la position définie par rapport à la fin du télégramme (1) identifiée par la longueur totale du télégramme (1) lors de l'exécution de la correction d'erreur.
